# EUROPEAN PATENT SPECIFICATION

(11) **EP 1 139 677 B1**
(45) Date of publication and mention of the grant of the patent: **26.01.2005**
(21) Application number: 01301935.1
(22) Date of filing: 02.03.2001
(51) Int. Cl.: H04Q 7/22

(54) **Transfer of audio messages to a mobile entity**
Übertragung von Audionachrichten zu einer Mobileinheit
Transmission de messages audio à une entité mobile

(30) Priority: 29.03.2000 GB 0007472
(43) Date of publication of application: 04.10.2001
(73) Proprietor: Hewlett-Packard Company, A Delaware Corporation, Palo Alto, CA 94304 (US)
(72) Inventor: I'Anson, Colin, Frenchay, Bristol BS16 1JL (GB)
(74) Representative: Squibbs, Robert Francis

(56) References cited:
- EP-A- 0 682 457
- EP-A- 0 808 073
- EP-A- 0 981 252
- WO-A-00/02367
- WO-A-99/41922
- PATENT ABSTRACTS OF JAPAN vol. 1999, no. 02, 26 February 1999 (1999-02-26) -& JP 10 304450 A (MITSUBISHI ELECTRIC CORP), 13 November 1998 (1998-11-13) -& DATABASE WPI Derwent Publications Ltd., London, GB; AN 1999-052925 XP002197245 & JP 10 304450 A (MITSUBISHI ELECTRIC CORP), 13 November 1998 (1998-11-13)

## Description

### Field of the Invention

The present invention relates to a method and service system for the transfer of audio messages to a mobile entity over a mobile radio infrastructure.

### Background of the Invention

Communication infrastructures suitable for mobile users (in particular, though not exclusively, cellular radio infrastructures) have now become widely adopted. Whilst the primary driver has been mobile telephony, the desire to implement mobile data-based services over these infrastructures, has led to the rapid development of data-capable bearer services across such infrastructures. This has opened up the possibility of many Internet-based services being available to mobile users.

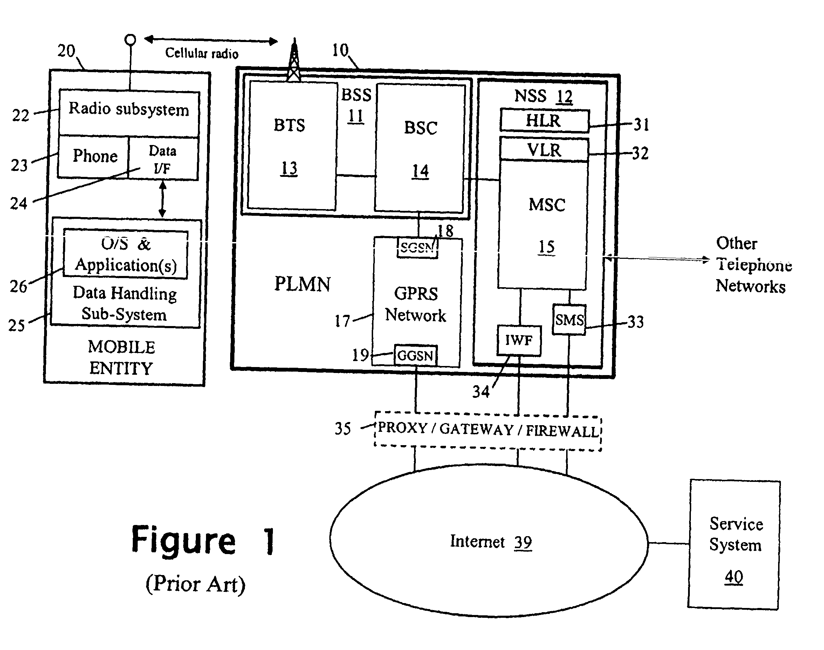

By way of example, Figure 1 shows one form of known communication infrastructure for mobile users providing both telephony and data-bearer services. In this example, a mobile entity 20, provided with a radio subsystem 22 and a phone subsystem 23, communicates with the fixed infrastructure of GSM PLMN (Public Land Mobile Network) 10 to provide basic voice telephony services. In addition, the mobile entity 20 includes a data-handling subsystem 25 interworking, via data interface 24, with the radio subsystem 22 for the transmission and reception of data over a data-capable bearer service provided by the PLMN; the data-capable bearer service enables the mobile entity 20 to communicate with a service system 40 connected to the public Internet 39. The data handling subsystem 25 supports an operating environment 26 in which applications run, the operating environment including an appropriate communications stack.

More particularly, the fixed infrastructure 10 of the GSM PLMN comprises one or more Base Station Subsystems (BSS) 11 and a Network and Switching Subsystem NSS 12. Each BSS 11 comprises a Base Station Controller (BSC) 14 controlling multiple Base Transceiver Stations (BTS) 13 each associated with a respective "cell" of the radio network. When active, the radio subsystem 22 of the mobile entity 20 communicates via a radio link with the BTS 13 of the cell in which the mobile entity is currently located. As regards the NSS 12, this comprises one or more Mobile Switching Centers (MSC) 15 together with other elements such as Visitor Location Registers 32 and Home Location Register 32.

When the mobile entity 20 is used to make a normal telephone call, a traffic circuit for carrying digitised voice is set up through the relevant BSS 11 to the NSS 12 which is then responsible for routing the call to the target phone (whether in the same PLMN or in another network).

With respect to data transmission to/from the mobile entity 20, in the present example three different data-capable bearer services are depicted though other possibilities exist. A first data-capable bearer service is available in the form of a Circuit Switched Data (CSD) service; in this case a full traffic circuit is used for carrying data and the MSC 32 routes the circuit to an InterWorking Function IWF 34 the precise nature of which depends on what is connected to the other side of the IWF. Thus, IWF could be configured to provide direct access to the public Internet 39 (that is, provide functionality similar to an IAP - Internet Access Provider IAP). Alternatively, the IWF could simply be a modem connecting to a PSTN; in this case, Internet access can be achieved by connection across the PSTN to a standard IAP.

A second, low bandwidth, data-capable bearer service is available through use of the Short Message Service that passes data carried in signalling channel slots to an SMS unit which can be arranged to provide connectivity to the public Internet 39.

A third data-capable bearer service is provided in the form of GPRS (General Packet Radio Service which enables IP (or X.25) packet data to be passed from the data handling system of the mobile entity 20, via the data interface 24, radio subsystem 22 and relevant BSS 11, to a GPRS network 17 of the PLMN 10 (and vice versa). The GPRS network 17 includes a SGSN (Serving GPRS Support Node) 18 interfacing BSC 14 with the network 17, and a GGSN (Gateway GPRS Support Node) interfacing the network 17 with an external network (in this example, the public Internet 39). Full details of GPRS can be found in the ETSI (European Telecommunications Standards Institute) GSM 03.60 specification. Using GPRS, the mobile entity 20 can exchange packet data via the BSS 11 and GPRS network 17 with entities connected to the public Internet 39.

The data connection between the PLMN 10 and the Internet 39 will generally be through a firewall 35 with proxy and/or gateway functionality.

Different data-capable bearer services to those described above may be provided, the described services being simply examples of what is possible.

In Figure 1, a service system 40 is shown connected to the Internet 40, this service system being accessible to the OS/application 26 running in the mobile entity by use of any of the data-capable bearer services described above. The data-capable bearer services could equally provide access to a service system that is within the domain of the PLMN operator or is connected to another public or private data network.

With regard to the OS/application software 26 running in the data handling subsystem 25 of the mobile entity 20, this could, for example, be a WAP application running on top of a WAP stack where "WAP" is the Wireless Application Protocol standard. Details of WAP can be found, for example, in the book "Official Wireless Application Protocol" Wireless Application Protocol Forum, Ltd published 1999 Wiley Computer Publishing. Where the OS/application software is WAP compliant, the firewall will generally also serve as a WAP proxy and gateway. Of course, OS/application 26 can comprise other functionality (for example, an e-mail client) instead of, or additional to, the WAP functionality.

The mobile entity 20 may take many different forms. For example, it could be two separate units such as a mobile phone (providing elements 22-24) and a mobile PC (data-handling system 25) coupled by an appropriate link (wireline, infrared or even short range radio system such as Bluetooth). Alternatively, mobile entity 20 could be a single unit such as a mobile phone with WAP functionality. Of course, if only data transmission/reception is required (and not voice), the phone functionality 24 can be omitted; an example of this is a PDA with built-in GSM data-capable functionality whilst another example is a digital camera (the data-handling subsystem) also with built-in GSM data-capable functionality enabling the upload of digital images from the camera to a storage server.

Whilst the above description has been given with reference to a PLMN based on GSM technology, it will be appreciated that many other mobile radio technologies exist and can typically provide the same type of functionality as described for the GSM PLMN 10.

When a mobile user with a single channel radio is engaged on a voice call, or on-line for data services, or the mobile does not answer (switched off, out of range, too lazy) voice callers cannot get through. Typically their call will be redirected to a voice mail system within the PLMN. These calls can be retrieved later by the user perhaps as a result of a voice-mail alert. Prior art documents relevant to the problem of providing an efficient means of delivering audio messages to a mobile user include:
- WO 99/34587 "System and Method for Connecting a Call to a Mobile Subscriber Connected to the Internet", K Sallberg, (Ericsson);
- US 5,950,123 "Cellular Telephone Network Support of Audible Information Delivery to Visually impaired Subscribers", Schwelb and Guimont, (Ericsson);
- EP 0821537 A "Mobile Station having Cellular and Pager Modes", A Vaisanen et al, (Nokia);
- WO 00/02367 "Voice Mail Server, Mobile Station and Method for Voice Mail Message Transmission" (Nokia Networks) discloses a voice mail server that adapts voice mails and sends them as data to the IP address of a mobile device;
- JP 10-304450 "Mobile Radio Communication System" (Mitsubishi Electric Corp) discloses a system in which a control station is used to temporarily store a voice mail until a voice circuit channel is available for delivering it to a mobile device;
- EP 0 808 073 A "Method and Apparatus for mobile radio system selection" (Motorola) discloses a mobile radio system in which a mobile determines, at call setup time, which of several available services to use, this determination being made on the basis of received quality and tariff information.

It is an object of the present invention to provide a way of delivering audio messages to a mobile user that provides efficiency benefits for both the user and PLMN operator.

### Summary of the Invention

According to the present invention, there is provided a method of transferring audio messages to a mobile entity across a mobile radio infrastructure, the method comprising the steps of:
(a) transferring to a service system a voice call made towards the mobile entity but which cannot be completed;
(b) recording the call at the service system and forming it into a data message addressed to the mobile entity;
(c) passing the data message to the mobile entity over a data-capable bearer service of the mobile radio infrastructure; and
(d) storing the data message in the mobile entity for subsequent access by a user; characterised in that step (c) is effected at a time determined to avoid expected periods of peak traffic loading of the mobile radio infrastructure.

### Brief Description of the Drawings

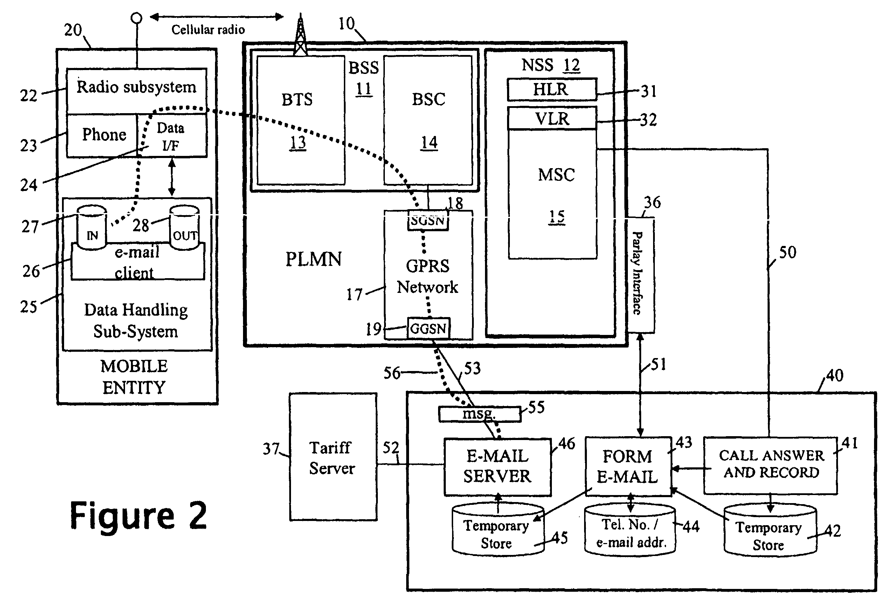

A method and service-system, both embodying the present invention, will now be described, by way of non-limiting example, with reference to the accompanying diagrammatic drawings, in which:
. **Figure 1** is a diagram of a known communications infrastructure usable for transferring voice and data to/from a mobile entity; and
. **Figure 2** is a diagram illustrating an embodiment of the invention as applied to the communications infrastructure of Figure 1.

### Best Mode of Carrying Out the Invention

A service system and method embodying the invention will now be described with reference to Figure 2. It is to be understood that the present invention is not limited to the specifics of the mobile entity and communication infrastructure shown in Figure 2 and the generalisations discussed above in relation to Figure 1 regarding these elements apply equally to the operational context of the service system 40. Furthermore, whilst the service system 40 is shown as connected to the GPRS network 17 of PLMN 10, it could be connected either directly or through the public Internet (or to another fixed data network) to any data-capable bearer service of PLMN.

In the Figure 2 embodiment, the mobile radio infrastructure (PLMN) 10 is of standard form, providing both a voice call service and data-capable bearer service to mobile entity 20. The mobile entity 20 (preferably a cell phone with linked PC or a smart phone) includes voice phone functionality 23 and runs an e-mail client 26 with in-box 27 and outbox 28; in the present embodiment, the e-mail client 26 is capable of playing audio segments.

The PLMN 10 connects with the peak traffic reduction service system 40 both through voice circuits 50 and a data connection 53 (in the present example, this connection is with GPRS network 17). The service system is also arranged to access, via connection 51; various IN services in the PLMN 10 via a proprietary or open, e.g. Parlay, interface. Finally, the service system 40 can access, via connection 52, a tariff server 37 that holds tariff data for the data-capable bearer services that are available to service system for transferring data, via connection 53, through the PLMN to mobile entity 20; this tariffdata even if static will generally reflect the variation in loading of the PLMN with time (higher tariffs corresponding to higher network loadings). In the present example, it is assumed that this tariffdata is dynamically-adjusted according to the current PLMN loading to give a closer relation between current loading and current tariff.

The service system comprises:
- a call answer and record block 41 for receiving a voice call over line 50;
- a store 42 for temporarily holding voice calls received by block 41;
- a functional block 43 for forming an e-mail incorporating the stored voice call in digital form, the e-mail being addressed to an address corresponding to the in-box 27 of the mobile entity to which the voice call was originally directed;
- a database 44 for looking up the address of where to send an e-mail on the basis of the called party ID of the corresponding voice call;
- a store 45 for temporarily holding the e-mails formed by block 43; and
- an e-mail server 46 for interrogating the dynamically-updated tariff server 37 and determining when to send the e-mails held in store 45 to the corresponding mobile entities over the data-capable bearer service of PLMN 10.
The mechanism used to get the called party ID of a received voice call can be any of those standardly used for this purpose in commercially available voice mail systems, namely, interrogation of the signaling network of the PLMN or of the IN interface 36.

Operation of the overall system is as follows. When an in-coming voice call from another mobile or from another fixed or mobile network cannot be answered by the target mobile entity 20, the call is rerouted from the mobile switching centre (MSC) 15 to the call answer and record interface 41 of the peak traffic reduction service system 40. Interface 41 answers the call with a voice message (which can be a user-generated message) informing the caller that the intended recipient cannot be reached and they may leave a message. The caller then leaves their message which is recorded by digital means and stored in store 42.

At some stage during call answering and recording, the service system determines the called party ID for the voice call together with any other called party details that the service system is permitted to collect.

Once the call is complete an e-mail message is created by block 43, this message containing the digitised voice message and any further details of the call (time received, length, any details of the recipient, etc.,) as text. The e-mail message is addressed to the mobile entity 20 by using the called party ID to look up the target e-mail address in database 44. The resultant e-mail message is then held in store 45 until the e-mail server 46 determines that the time has arrived to send the e-mail messages.

In the present example, the e-mail server determines when to send the e-mail message by interrogating the tariff server 37 to ascertain when a favorable tariff is available - such a tariff generally corresponding to a period of low PLMN usage. The server 46 is arranged to take account of how long it has held the oldest e-mail message when setting the threshold tariff level below which the server will start e-mail transmission (once started on sending email, the present system is arranged to continue until all outstanding messages have been sent).

Upon the e-mail server 46 deciding that the e-mail messages for mobile entity 20 should now be sent, the connection 53 to the GPRS network 17 is opened (if not already up), a connection established with mobile entity 20 using a data-capable bearer service of the PLMN, and the e-mail messages 55 held in store 45 for entity 20 are pushed to the inbox of mobile entity 20 (see dotted line 56) where they are received and stored. In due course, the user of the mobile entity accesses the messages which can then be played back (for example, through a headset or earpiece)

Since the cache of messages in inbox 27 on the mobile entity can be a couple of hours old, the user is enabled to force an up-date at any time, including peak times, by dialing into the e-mail server; however, the user will then need to pay the current tariff.

The foregoing arrangement provides a convenient way for the user to receive audio message whilst reducing the peak loading of the PLMN by avoiding the peak traffic periods (in the present example, as reflected by the current applicable tariff)

### Variants

It will be appreciated that many variants are possible to the above-described embodiment. Thus, in additional to the described method of consulting the dynamically updated tariff server 37, there are a number of other ways in which the e-mail server 46 can determine the appropriate time to send the data messages 55 to the mobile entity. These other ways include:
- consulting a predetermined tariff schedule held by, or accessible to, the service system;
- consulting a preset sending schedule agreed with the operator of the mobile radio infrastructure for avoiding peak load periods on the infrastructure;
- negotiating with an arbitration system in communication with the mobile radio infrastructure, to satisfy transfer parameters specified by the service system for transfer of the data message through the mobile radio infrastructure (such an arbitration system is more fully described in our co-pending UK patent application GB-A-2 358 766 filed 26 January 2000;
- detecting a trigger from the mobile radio infrastructure indicating to the service system that the mobile entity is available to receive the data message (the PLMN could defer sending this trigger at peak traffic load times).

The service system can include a speech to text converter for converting the received voice calls into text before including them in the e-mail messages; whilst this conversion is preferably done automatically, it would also be possible to have human operators carry out this task. Where the voice calls are converted into text, then the e-mail client 26 in mobile entity 20, need not be capable of playing audio segments; however, it may be convenient to include a voice synthesizer so that the e-mails can be played back audibly to the user.

Instead of using e-mail protocols and architecture for data message transfer, web-based protocols could be used in a WAP architecture, or other proprietary store and forward mechanisms could be used to create out-boxes in the peak traffic reduction service system 40 for forwarding data messages to an in-box in the mobile entity.

Furthermore, while the Figure 2 embodiment is based on the use ofbackground e-mail and GSM, foreground e-mail (or other store and forward data transfer methods) can be used over any data-capable mobile communications network.

The transfer of the data messages 55 does not necessarily use the same mobile network as the original re-directed voice call.

## Claims

1. A method of transferring audio messages to a mobile entity (20) across a mobile radio infrastructure(10), the method comprising the steps of:
(a) transferring to a service system (40) a voice call made towards the mobile entity (20) but which cannot be completed;
(b) recording (41) the call at the service system (40) and forming it into a data message (55) addressed to the mobile entity;
(c) passing the data message (55) to the mobile entity (20) over a data-capable bearer service of the mobile radio infrastructure (10); and
(d) storing the data message in the mobile entity for subsequent access by a user;
**characterised in that** step (c) is effected at a time determined to avoid expected periods of peak traffic loading of the mobile radio infrastructure.

2. A method according to claim 1, wherein the data message (55) is passed to the mobile entity (20) at a time corresponding to an off-peak charging rate through the mobile radio infrastructure (10) according; to a predetermined tariff schedule held or accessed by the service system (40).

3. A method according to claim 1, wherein the data message (55) is passed to the mobile entity (20) at a time corresponding to an off-peak charging rate through the mobile radio infrastructure (10) according to a charging schedule (37) dynamically changed to take account of the actual loading of the mobile radio infrastructure, this schedule being accessed at least periodically by the service system (40).

4. A method according to claim 1, wherein the data message (55) is passed to the mobile entity (20) at a time preset according to a schedule agreed with the operator of the mobile radio infrastructure (10) for avoiding peak load periods on the infrastructure (10).

5. A method according to claim 1, wherein the data message (55) is passed to the mobile entity (20) in response to the mobile radio infrastructure (10) indicating to the service system (40) that the mobile entity (20) is available to receive the data message (55), this indication being provided during a period that is not a said expected peak traffic loading period.

6. A method according to claim 1, wherein voice call is converted to text at the service system (40) for incorporation into the data message (55).

7. A method according to claim 1, wherein transfer of the voice call to the service system (40) results in the service system being provided with a called party ID identifying the mobile device (20), the service system (40) using this ID to look up a destination address for the data message (55).

8. A method according to any one of the preceding claims, wherein the data message (55) is an e-mail message.

9. A service system adapted to carry out the method of any one of the preceding claims

## Patentansprüche

1. Verfahren zum Übertragen von Audiomitteilungen an eine mobile Entität (20) über eine Mobilfunkinfrastruktur (10), wobei das Verfahren folgende Schritte umfasst:
(a) Übertragen eines Sprachanrufs, der zu der mobilen Entität (20) durchgeführt wurde, aber nicht abgeschlossen werden kann, an ein Dienstsystem (40);
(b) Aufzeichnen (41) des Anrufs an dem Dienstsystem (40) und Bilden desselben in eine Datenmitteilung (55), die an die mobile Entität adressiert ist;
(c) Weiterleiten der Datenmitteilung (55) an die mobile Entität (20) über einen Trägerdienst mit Datenfähigkeit der Mobilfunkinfrastruktur (10); und
(d) Speichern der Datenmitteilung in der mobilen Entität für einen nachfolgenden Zugriff durch einen Benutzer;
**dadurch gekennzeichnet, dass** Schritt (c) zu einem Zeitpunkt bewirkt wird, der bestimmt wird, um erwartete Perioden einer Spitzenverkehrsbelastung der Mobilfunkinfrastruktur zu vermeiden.

2. Ein Verfahren gemäß Anspruch 1, bei dem die Datenmitteilung (55) zu einem Zeitpunkt an die mobile Entität (20) weitergeleitet wird, der einer außerhalb der Spitzengebührenzeit liegenden Rate entspricht, durch die Mobilfunkinfrastruktur (10) gemäß einem vorbestimmten Tarifzeitplan, der durch das Dienstsystem (40) gehalten wird oder auf den durch dasselbe zugegriffen wird.

3. Ein Verfahren gemäß Anspruch 1, bei dem die Datenmitteilung (55) zu einem Zeitpunkt zu der mobilen Entität (20) geleitet wird, der einer außerhalb der Spitzenzeit gelegenen Gebührenrate entspricht, durch die Mobilfunkinfrastruktur (10) gemäß einem Gebührenzeitplan (37), der dynamisch geändert wird, um die tatsächliche Belastung der Mobilfunkinfrastruktur zu berücksichtigen, wobei auf diesen Zeitplan zumindest periodisch durch das Dienstsystem (40) zugegriffen wird.

4. Ein Verfahren gemäß Anspruch 1, bei dem die Datenmitteilung (55) zu einem Zeitpunkt an die mobile Entität (20) weitergeleitet wird, der gemäß einem Zeitplan voreingestellt wird, der mit dem Betreiber der Mobilfunkinfrastruktur (10) vereinbart ist, zum Vermeiden von Spitzenbelastungsperioden auf der Infrastruktur (10).

5. Ein Verfahren gemäß Anspruch 1, bei dem die Datenmitteilung (55) an die mobile Entität (20) weitergeleitet wird, ansprechend darauf, dass die Mobilfunkinfrastruktur (10) dem Dienstsystem (40) anzeigt, dass die mobile Entität (20) verfügbar ist, um die Datenmitteilung (55) zu empfangen, wobei diese Anzeige während einer Periode geliefert wird, die nicht die erwartete Spitzenverkehrsbelastungsperiode ist.

6. Ein Verfahren gemäß Anspruch 1, bei dem der Sprachanruf an dem Dienstsystem (40) zu Text umgewandelt wird, zum Einfügen in die Datenmitteilung (55).

7. Ein Verfahren gemäß Anspruch 1, bei dem die Übertragung des Sprachanrufs zu dem Dienstsystem (40) dazu führt, dass das Dienstsystem mit einer Aufgerufener-Teilnehmer-ID versehen wird, die das mobile Gerät (20) identifiziert, wobei das Dienstsystem (40) diese ID verwendet, um eine Bestimmungsortadresse für die Datenmitteilung (55) nachzuschlagen.

8. Ein Verfahren gemäß einem der vorhergehenden Ansprüche, bei dem die Datenmitteilung (55) eine E-Mail-Mitteilung ist.

9. Ein Dienstsystem, das zum Ausführen des Verfahrens gemäß einem der vorhergehenden Ansprüche angepasst ist.

## Revendications

1. Procédé de transfert de messages audio vers une entité mobile (20) au sein d'une infrastructure radio mobile (10), le procédé comprenant les étapes consistant à :
(a) transférer vers un système de services (40) un appel vocal effectué vers l'entité mobile (20) mais qui ne peut aboutir ;
(b) enregistrer (41) l'appel dans le système de services (40) et le transformer en un message de données (55) adressé à l'entité mobile ;
(c) transmettre le message de données (55) à l'entité mobile (20) par l'intermédiaire d'un service de support de données capable de transmettre et de recevoir des données de l'infrastructure radio mobile (10) ; et
(d) stocker le message de données dans l'entité mobile en vue d'un accès ultérieur par un utilisateur ;
**caractérisé en ce que** l'étape (c) est effectuée à un moment déterminé de façon à éviter des périodes prévues de pics d'encombrement du trafic de l'infrastructure radio mobile.

2. Procédé selon la revendication 1, dans lequel le message de données (55) est transmis à l'entité mobile (20) à un moment correspondant à un tarif heures creuses par l'intermédiaire de l'infrastructure radio mobile (10) selon des horaires de tarif prédéterminés ou est consulté par le système de services (40).

3. Procédé selon la revendication 1, dans lequel le message de données (55) est transmis à l'entité mobile (20) à un moment correspondant à un tarif heures creuses par l'intermédiaire de l'infrastructure radio mobile (10) selon des horaires de tarification (37) modifiés de façon dynamique pour prendre en compte l'encombrement actuel de l'infrastructure radio mobile, ces horaires étant consultés au moins de manière régulière par le système de services (40).

4. Procédé selon la revendication 1, dans lequel le message de données (55) est transmis à l'entité mobile (20) à un moment prédéterminé selon des horaires convenus avec l'opérateur de l'infrastructure radio mobile (10) afin d'éviter les périodes de pics d'encombrement de l'infrastructure (10).

5. Procédé selon la revendication 1, dans lequel le message de données (55) est transmis à l'entité mobile (20) en réponse à l'indication par l'infrastructure radio mobile (10) au système de services (40) que l'entité mobile (20) est prête à recevoir le message de données (55), cette indication étant fournie pendant une période qui n'est pas une période prévue de pics d'encombrement du trafic.

6. Procédé selon la revendication 1, dans lequel l'appel vocal est converti en texte par le système de services (40) pour être incorporé dans le message de données (55).

7. Procédé selon la revendication 1, dans lequel le transfert de l'appel vocal vers le système de services (40) se traduit par la fourniture au système de services d'un numéro d'identification de la partie appelée identifiant le dispositif mobile (20), le système de services (40) utilisant ce numéro d'identification pour chercher une adresse de destination pour le message de données (55).

8. Procédé selon l'une quelconque des revendications précédentes, dans lequel le message de données (55) est un message électronique.

9. Système de services conçu pour réaliser le procédé de l'une quelconque des revendications précédentes.
